# EUROPEAN PATENT APPLICATION

(11) **EP 3 399 479 A1**
(43) Date of publication of application: **07.11.2018**
(21) Application number: 17169311.2
(22) Date of filing: 03.05.2017
(51) Int. Cl.: G06Q 10/08

(54) **METHOD FOR OBTAINING DELIVERY CONFIRMATION OF A PHYSICAL ITEM**

(71) Applicant: Weymeersch, Steyn, 9230 Wetteren (BE); Elegheert, Veronique, 9230 Wetteren (BE)
(72) Inventor: Weymeersch, Steyn, 9230 Wetteren (BE)
(74) Representative: IP HILLS NV

(57) **Abstract**

A computer-implemented method for obtaining confirmation of delivery of a physical item at a destination address in absence of the destined receiver at the destination address, comprises:
- obtaining the destination address by a smart device (103) carried by the delivery person;
- obtaining contact information (111) associated with the destination address from a contact database (102);
- using the contact information to establish a connection (112) between the smart device (103) and a user device (104) of the destined receiver running a delivery confirmation application;
- receiving from the user device (104) an identification (113) of the destined receiver and verifying the identification;
- receiving from the user device (104) a digital signature (113) of the destined receiver thereby allowing the delivery person to leave the physical item at the destination address; and
- registering (114) delivery of the physical item in a delivery register (101).

## Description

### Field of the Invention

The present invention generally relates to a computer-implemented method for obtaining confirmation of delivery of a physical item, e.g. a parcel or registered letter, in situations where the destined receiver, e.g. the destined person or an authorized representative of the destined entity, is not present at the destination address at the time the delivery person arrives at this destination address.

### Background of the Invention

When the delivery person of a registered sending arrives at the destination address at a point in time where the destined receiver or its authorized representative is absent, the delivery person cannot leave the registered sending at the destination address. In such situation, the delivery person typically has to leave a message at the destination address to inform the destined receiver on the attempt to deliver the registered sending and to inform the destined receiver on the address where the registered sending can be picked up, e.g. the nearest post office, as well as the time period wherein the registered sending will be available for pick-up at this address, e.g. the next two weeks. The delivery person must carry the registered sending back to the central location, e.g. the post office, where it will be contained temporarily. Upon valid identification and authorization, the destined receiver or his authorized representative can pick-up the registered sending. If the registered sending is not timely picked-up, it is typically sent back to the sender.

The traditional method for obtaining delivery confirmation on a registered sending is labour intensive and time consuming for the delivery person, e.g. the postman, who cannot deliver a high percentage of registered mails and parcels because of absence of the destined receiver at the time of arrival. Moreover, the known method is often frustrating on the destined receiver who has to visit the post office within the given time period and within the opening hours of that post office in order to pick up the registered sending. When the destined receiver arrives at the post office without a valid identity and/or without a valid authorisation, he will be refused to pick up the registered sending and will have to return at a later point in time. At the post office or central location, storage space must be provided for all undeliverable registered mail. As a result of the increase of online shopping and web based ordering of physical items, the storage space required to temporarily store all undeliverable parcels is growing steadily.

United States Patent Application US 2016/0379157 entitled "System and Method for Secure Proximity-Based Signatures for Parcel Delivery" recognizes the problem of absence of the authorized recipient of a parcel at the destination address in paragraph [0002]. US 2016/0379157 consequently describes a system that enables to obtain delivery confirmation from a person that is absent at the destination address. At the destination address, a dedicated device, the so-called Destination Validation Device or DVD 106, is installed and pre-configured with contact information of the person that should be contacted in case of parcel delivery. The Destination Validation Device DVD 106 has a sensor which upon arrival of the delivery person senses presence of a parcel and obtains metadata from the parcel. The obtained metadata is used by Destination Validation Device DVD 106 to prepare a delivery acknowledgement request that is sent to the person preregistered in DVD106 in order to obtain a signature confirming the delivery.

US 2016/0379157 mainly aims at reducing the time spent by the delivery personnel at the destination address in order to stay on schedule for remaining parcels to be delivered rather than waiting for a signature at the destination location. The system known from US 2016/0379157 thereto relies on dedicated hardware, i.e. DVD 106, that must be installed by a technician at each house, apartment, office, etc., in an area where delivery personnel can approach it, and that further must be preconfigured with contact information. In absence of such DVD 106, it remains impossible to obtain a delivery confirmation. Furthermore, US 2016/0379157 requires parcels with metadata that can be sensed by the sensor in DVD 106. A parcel or sending that does not contain such metadata cannot be sensed by DVD 106, as a result of which no delivery confirmation can be obtained for such sending.

United States Patent Application US 2005/0006470 A1, entitled "Proof of Presence and Confirmation of Parcel Delivery Systems and Methods" expresses the need for enhanced confirmation of delivery of a package, i.e. delivery confirmation that is more secure than a signature, because such proof of delivery of ordered items is often required for the release of payment for such items. The system described in US 2005/0006470 A1 relies on a unique location ID that can be scanned by the delivery person only while he/she is at the delivery location, hence confirming physical presence at the delivery location. Further, unique package IDs each associated with a package are scanned for each package delivered. The unique location ID and unique package IDs are linked to proof that the one or more packages have been delivered at the delivery location.

Although US 2005/0006370 A1 envisages to improve proof of delivery of packages, the system and method described therein do not involve the destined recipient or its authorized representative, let aside involve the destined recipient of the packages when he/she is absent at the destination location at the time of delivery. The confirmation process and system described in US 2005/0006370 A1 therefore does not provide an adequate solution for registered mail/parcels that require a signature of the destined recipient to establish legal proof of delivery.

United States Patent Application US 2017/0024693 A1, entitled "Setup of a Communication Link to a User Apparatus via an Access Control Apparatus" describes a method to control access to a parcel box for a delivery person, thus enabling the delivery person to safely deliver a parcel at a certain address. If the parcel box is not accessible upon arrival of the delivery personnel at the address, a device held by the delivery person will establish connection with the destined recipient to obtain authorisation to access the parcel box. A digital key enabling to open the parcel box is returned.

Although US 2017/0024693 A1 provides a solution for delivery of parcels in absence of the destined recipient at the delivery address, it relies on a parcel box and exchange of an access code for the parcel box. The process does not involve exchange of a signature of the destined recipient or its authorized representative and therefore provides no adequate solution for delivery of a registered letter or parcel with legal requirement to obtain a signature from an authorized person.

United States Patent Application US 2016/0292635 A1, entitled "Delivery Instructions on Delivery Location Detection Through a Wireless Beacon Device" solves the problem of providing delivery instructions to a delivery person at the destination address. This may be useful for instance in apartment buildings where multiple entities, e.g. persons, companies, etc., are located at a single address. A package is equipped with a beacon that tracks its location. When the beacon's location corresponds to the destination location of the package, delivery instructions are transferred from the beacon to the delivery person's device.

Although US 2016/0292635 A1 reduces the time delivery personnel may waste at the delivery address, the method and system described therein does not involve the destined recipient or its authorized representative. Consequently, no solution is provided for obtaining a signature or delivery confirmation from the destined recipient or its authorized representative in situations where such person is absent at the time of delivery.

### Summary of the Invention

It is an objective of the present invention to disclose a method and system for obtaining delivery confirmation of a physical item at a destination address that resolves one or more of the shortcomings of the above described existing solutions. More particularly, it is an objective to disclose a method and system for obtaining delivery confirmation from the destined recipient or its authorized representative in situations where this person is absent at the destination location at the time of delivery, such that a registered sending must not be taken back to a central deposit by the delivery person, the destined recipient must not pick-up the registered sending at a later point in time at the central location, accompanied by the appropriate identification and authorization documents, and reduced storage space is required at the central location to temporarily store and manage undeliverable registered mail and/or parcels.

According to the present invention, the above objective is realized by the computer-implemented method for obtaining confirmation of delivery of a physical item at a destination address in absence of the destined receiver at said destination address as defined by claim 1, the method being implemented by a smart device carried by a delivery person of the physical item, the method comprising the steps of:
- obtaining the destination address;
- obtaining contact information associated with the destination address from a contact database;
- using the contact information to establish a connection between the smart device and a user device of the destined receiver running a delivery confirmation application;
- receiving from the user device an identification of the destined receiver and verifying the identification at the smart device;
- receiving from the user device a digital signature of the destined receiver thereby allowing the delivery person to leave the physical item at the destination address; and
- registering delivery of the physical item in a delivery register.

Thus, upon arrival at the destination address or prior to arriving at the destination address, a smart device carried by the delivery person under control of a delivery confirmation application obtains the destination address. The delivery confirmation application may obtain the destination address or portions thereof through consultation of a database, through interrogation of the delivery person, or through use of positioning technology available in the smart device. Using the destination address, the smart device of the delivery person thereupon obtains contact information related to the destination address: this may be a telephone number, chat username, etc. of a person that is authorized to confirm delivery at that destination address, or it may be a list of telephone numbers, chat usernames, etc. of multiple persons that are authorized to confirm delivery for one or more entities located at the destination address. In the latter situation, the delivery person will have to select a single person out of the list that shall be contacted. The delivery person thereto may use information indicative for the destination mentioned on the letter, parcel or documents accompanying the parcel. The delivery person's smart device under control of the delivery confirmation application uses the contact information to establish a connection with the person authorized to confirm delivery. Typically, a data connection is established between the delivery confirmation application running on the delivery person's smart device and a delivery confirmation application running on the authorized person's smart device, e.g. his smart phone, table computer, laptop computer, desktop computer, etc. The contacted person is requested to transmit an identification and the identification is verified by the delivery confirmation application running on the delivery person's smart device. The identification may for instance comprise username/password, login information, a secret code or key, etc., that can be verified at the delivery person's smart device. After valid identification of the contacted person, i.e. after having verified that the contacted person corresponds to the registered person authorized to confirm delivery for the destined entity of the sending, this person is requested to send a digital signature. The digital signature shall serve as confirmation for delivery. Only upon receipt of the digital signature at the delivery person's smart device, the delivery person is allowed to leave the sending at the destination address, and the delivery confirmation application shall be able to register delivery in the delivery register. This registration may be accompanied by information such as the received digital signature, the date and time, an identification of the delivery person, etc.

The computer-implemented method according to the invention does not require or involve any dedicated hardware such as sensors, intelligent parcel boxes or delivery validation devices, and further enables to reduce the amount of returned registered letters and parcels and the associated complexity of inventorying and managing such returned registered delivery items at a central location for later pick-up or return to the sender. The destined person does not have to plan a visit to the central location, accompanied by identification and authorization documents, to pick-up the sending, but will find the registered sending at the delivery address upon his/her first return. Optionally, the delivery confirmation application may enable the delivery person and authorized person to communicate with each other, and e.g. share details on the precise location where the registered sending can be dropped, e.g. in or near a letter box or parcel box, with the neighbors, near the backdoor, garage or carport, etc.

In embodiments of the delivery confirmation method according to the present invention, defined by claim 2, the destination address or portions thereof are obtained from location information generated by a location tracking unit in the smart device.

Indeed, while approaching the destination address, the delivery person's smart device under control of the delivery confirmation application may obtain portions of the destination address, e.g. the street name, from a location tracking unit available in the smart device, e.g. a Global Positioning System unit or GPS unit in combination with a cartography application. This way, the destination address or portions thereof are obtained automatically, reducing the information that must be requested to and entered manually by the delivery person.

In embodiments of the delivery confirmation method according to the present invention, defined by claim 3, the destination address or portions thereof are obtained from the delivery person through manual entry in the smart device.

Indeed, in situations where the destination address cannot be obtained automatically from positioning technology available in the smart device or from a database containing metadata related to the registered sending, the destination address or missing portions thereof like for instance the house number must be entered manually by the delivery person. The delivery person may obtain the destination address from the envelope, packaging, or documents accompanying the registered sending.

In embodiments of the delivery confirmation method according to the present invention, defined by claim 4, the contact database is stored locally in the smart device.

Thus, the smart device under control of the delivery notification application may consult a locally stored database to obtain the contact information for the destined person or person authorized to confirm delivery of items for the destined entity.

In alternate embodiments of the delivery confirmation method according to the present invention, defined by claim 5, the contact database is stored remotely in a cloud server.

Hence, the smart device under control of the delivery notification application may establish connectivity with a cloud server and consult a remote database to obtain the contact information for the destined person or person authorized to confirm delivery of items for the destined entity.

Embodiments of the delivery confirmation method according to the present invention, defined by claim 6, further comprise:
- after successful registration of delivery of the physical item automatically obtaining a next destination address of a next destined receiver of a next physical item;
- obtaining next contact information associated with the next destination address from the contact database; and
- using the next contact information to establish a connection between the smart device and a user device of the next destined receiver running the delivery confirmation application.

Indeed, to enhance the efficiency and reduce the time spent by delivery personnel in between subsequent deliveries, the smart device of the delivery person, under control of the delivery confirmation application, may automatically obtain the next destination address after registration of a delivery. The next destination address may for instance be obtained from a database of registered deliveries, through scanning the next letter or parcel, from a task list or daily route maintained in the application for the delivery person, etc. The next destination address is used by the application to obtain the next contact information and the application may automatically attempt to establish contact with the next destined receiver (or its authorized representative), e.g. while the delivery person is driving. The automatic establishment of a connection with the next destined receiver may be initiated as soon as the application receives the next contact information from the contact information database or when approaching the next destination address, for instance 2 km before arrival at the next destination address.

In embodiments of the delivery confirmation method according to the present invention, defined by claim 7, registering delivery of the physical item in the delivery register comprises:
- producing a picture of the physical item or scanning a code associated with the physical item; and
- transmitting the picture or the code to the delivery register for storage.

Thus, registration of the delivery may be supplemented with additional, useful information identifying the item that was left at the destination address, such as a picture of this item taken by the smart device of the delivery person, or a code scanned from this item by the smart device, or a code read from this item and entered into the smart device by the delivery person.

In embodiments of the delivery confirmation method according to the present invention, defined by claim 8, registering delivery of the physical item in the delivery register further comprises:
- obtaining time information indicative for when the picture was produced; and
- transmitting the time information to the delivery register for storage.

Thus, registration of the delivery may be supplemented with additional, useful information identifying the time the item was left at the destination address. Thereto, the delivery confirmation application may be configured to automatically register the time a picture of the item is taken by the smart device and transfer this time together with the picture to the delivery register for storage.

In embodiments of the delivery confirmation application according to the present invention, defined by claim 9, registering delivery of the physical item in the delivery register further comprises:
- producing location information; and
- transmitting the location information to the delivery register for storage.

Thus, registration of the delivery may be supplemented with additional, useful information identifying the location where the item was left. The location information may for instance be GPS coordinates automatically generated by a GPS unit in the smart device of the delivery person, and automatically transferred to the delivery register by the delivery confirmation application running on the smart device. This may particularly be advantageous when the location where the sending is left does not correspond with the destination address, e.g. because the authorized person instructed to drop the sending with the neighbours.

In embodiments of the delivery confirmation method according to the present invention, defined by claim 10, registering delivery of the physical item in the delivery register further comprises:
- obtaining time information indicative for when the location information was produced; and
- transmitting the time information to the delivery register for storage.

Indeed, as mentioned above, registration of the delivery may be supplemented with additional, useful information identifying the time the item was left by the delivery person. Thereto, the delivery confirmation application may be configured to automatically register the time location information was produced related to delivery of the item, and transfer this time together with the location information to the delivery register for storage.

In embodiments of the delivery confirmation method according to the present invention, defined by claim 11, the contact information of the destined receiver is kept invisible for the delivery person.

This way, for privacy reasons for instance, the contact information of the destined person or authorized representative is not shared with the delivery person and cannot be misused by the delivery person for other reasons than obtaining confirmation on the delivery through use of the delivery confirmation application.

In embodiments of the delivery confirmation method according to the present invention, defined by claim 12, the contact information enables to establish a connection with a powered representative of the destined receiver.

Indeed, as already indicated here above, contact information of the destined receiver must be interpreted to encompass contact information of the destined person in case the sending is destined to a single person, or contact information of one or more persons authorized to represent the destined entity in case the sending is destined to a legal entity, e.g. an organization, company, family, etc.

In addition to a computer-implemented method for obtaining confirmation on delivery of a physical item at a destination address, the present invention also relates to a computer program product as defined by claim 13, comprising computer-executable instructions for performing the method when the program is run on a computer.

The present invention further also relates to a computer readable storage medium comprising as defined by claim 14, comprising the computer program product, and to a data processing system as defined by claim 15, programmed for carrying out the method under control of the computer program product.

### Brief Description of the Drawings

Fig. 1 illustrates an embodiment of the method for obtaining confirmation on the delivery of a physical item according to the present invention; and
Fig. 2 illustrates a suitable computing system 200 for realizing methods and devices according to embodiments of the invention.

### Detailed Description of Embodiment(s)

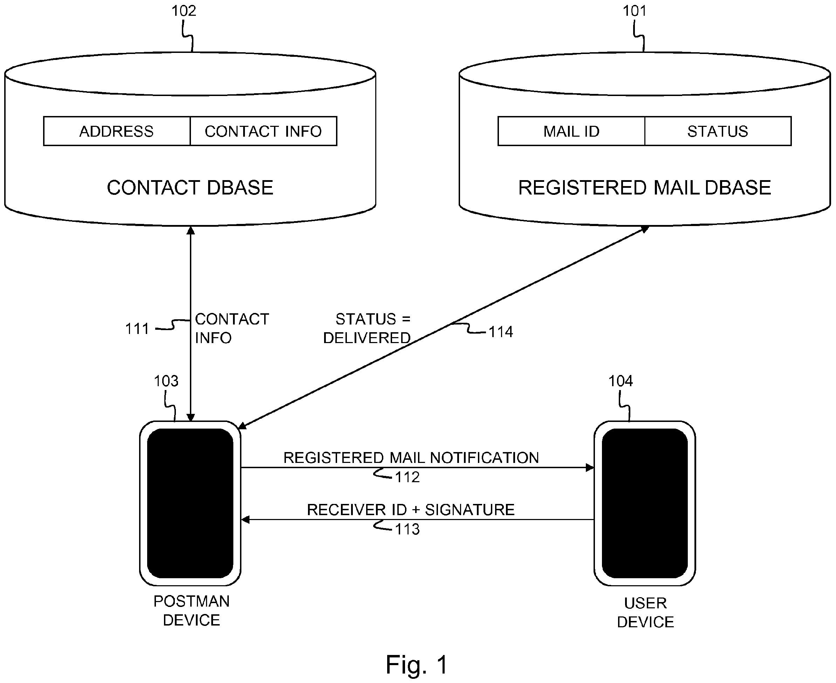

Fig. 1 shows a system comprising a registered mail database 101, a contact information database 102, a smartphone 103 held by the postman, and a smartphone 104 held by the user that is the destination of a registered letter to be delivered by the postman at the destination address indicated on the letter, i.e. the home address of the user. It is supposed that the user is absent at his home address at the date/time the postman arrives with the registered letter. To be able to leave the registered letter at the destination address, the postman must obtain delivery confirmation in the form of a signature of the destined user, or someone who is legally authorized to represent the destined user.

When arriving at the destination address, the postman launches a delivery confirmation application on his smartphone 103. Alternatively, this delivery confirmation application may already be running on his smartphone 103, e.g. it may be running continuously in the background during the working time of the postman. The delivery confirmation application configures the smartphone 103, more precisely the computing system therein, to execute an embodiment of the delivery confirmation method according to the present invention.

In a first step, the smartphone 103, under control of the delivery confirmation application, obtains the destination address of the registered letter. The destination address may be obtained from the registered mail database 101 if it is assumed that this registered mail database 101 maintains metadata such as the destination address in relation to registered letters. Alternatively, e.g. in situations where the registered mail database 101 does not maintain the destination address in relation to registered letters or in situations where this database is not reachable, the destination address may be obtained from the registered letter itself. The destination address may be obtained through a scan of the envelope and text recognition software, or may be obtained through interrogating the postman who manually enters the destination address in response to such interrogation. According to yet another alternative, the destination address may be obtained entirely or partially through use of positioning technology available in or accessible by the smartphone 103. The smartphone's GPS unit for instance may generate GPS coordinates that can be translated into an address or portions of an address, e.g. a street name and/or city name, through cartography. In case only a portion of the address is automatically generated by the smartphone 103, the postman may be requested to manually enter the missing portions of the destination address.

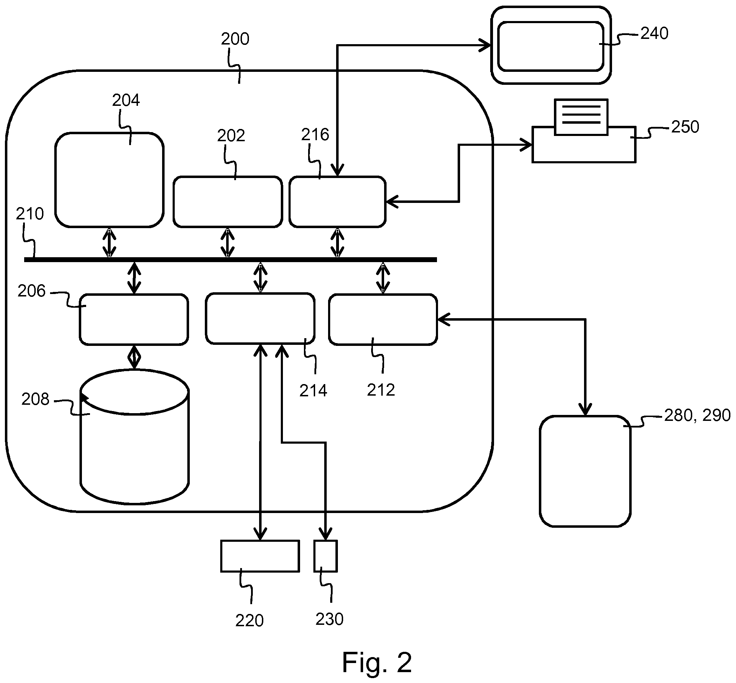

In a second step, the smartphone 103, under control of the delivery notification application, establishes contact with the contact information database 102 to obtain contact information associated with the destination address. As is indicated by arrow 111, the smartphone sends a request for contact information to the contact information database 102. This request contains the destination address. In reply to this request, the smartphone 103 receives contact information, e.g. a telephone number, e-mail address, or the like, associated with the destination address. Although the contact information database 102 has been drawn outside the smartphone 103 in Fig. 2, it is noticed that the location of this database 102 may vary in different embodiments of the invention. The contact information database 102 may be stored in cloud storage, i.e. storage facility hosted and operated by a third party, may be stored on proprietary servers that are operated and maintained by the postal services, or may even be stored entirely or partially on the postman's smartphone 103 such that the need for connectivity to cloud servers or other remote servers at the destination address disappears. It is further noticed that the received contact information may be kept secret for the postman in order to preserve the privacy of the user(s) associated with the destination address. The contact information may comprise a single telephone number, e-mail address or the like, of a single person who is authorized to receive registered letters at the destination address, or it may comprise multiple telephone numbers, e-mail addresses, or the like, in situations where multiple persons are authorized to receive registered letters at the destination address. The latter may for instance be the case if multiple entities, e.g. multiple companies, are registered at the destination address.

In a third step, the smartphone 103, under control of the delivery confirmation application, uses the received contact information to establish contact with user device 104. The smartphone 103 prepares and transmits a registered mail notification 112 to inform the user of user device 104 that the postman has arrived at his home address with a registered letter. The registered mail notification 112 comprises a request for the user to send an identification and digital signature confirming delivery of the registered letter. It is assumed that a delivery confirmation application is installed and running on the smartphone 104 of the user. This delivery confirmation application will receive and interpret the registered mail notification 112.

In a fourth step, the smartphone 104, under control of the delivery confirmation application and upon instruction of the user, generates and transmits a message 113 comprising a receiver identification and a digital signature of the user. It is noticed that in variant embodiments of the method, the identification and digital signature may be sent in separate messages. Upon receipt of message 113, the postman's smartphone 103, under control of the delivery confirmation application, verifies the identity of the user. The smartphone 103 in other words verifies if the received identity corresponds to the identity of the user who is authorized to receive registered letters at the destination address for the destined receiver. The smartphone 103 thereto again may consult the contact database 102 which is supposed to contain identification information for the persons authorized to receive registered letters.

Upon receipt of the digital signature as part of message 113, the postman is allowed to leave the registered letter at the destination address. Possibly, the user can also indicate in communication with the postman at which location the registered letter can be left. The postman leaves the registered letter at the destination address and continues to the next destination address. The smartphone 103, under control of the delivery confirmation application, informs the registered mail database 101 that the registered letter was delivered such that the status of that registered letter becomes changed in the registered mail database 101. Possibly, the communication 114 between the smartphone 103 and the registered mail database 101 in order to change the status of the registered letter also comprises a picture of the letter made by the camera in the smartphone 103, location information of the smartphone 103, and/or time information. This additional information is then stored in the registered mail database 101 to establish evidence that the registered letter was delivered at a certain date/time at the appropriate destination location.

Fig. 2 shows a computing system 200 suitable for implementing the above described embodiment of the invention. Computing system 200 may in general be formed as a suitable general purpose computer and comprise a bus 210, a processor 202, a local memory 204, one or more optional input interfaces 214, one or more optional output interfaces 216, a communication interface 212, a storage element interface 206 and one or more storage elements 208. Bus 210 may comprise one or more conductors that permit communication among the components of the computing system 200. Processor 202 may include any type of conventional processor or microprocessor that interprets and executes programming instructions. Local memory 204 may include a random access memory (RAM) or another type of dynamic storage device that stores information and instructions for execution by processor 202 and/or a read only memory (ROM) or another type of static storage device that stores static information and instructions for use by processor 202. Input interface 214 may comprise one or more conventional mechanisms that permit an operator to input information to the computing device 200, such as a keyboard 220, a mouse 230, a touch sensitive display, a pen, voice recognition and/or biometric mechanisms, etc. Output interface 216 may comprise one or more conventional mechanisms that output information to the operator, such as a display 240, etc. Communication interface 212 may comprise any transceiver-like mechanism such as for example one or more Ethernet interfaces that enables computing system 200 to communicate with other devices and/or systems, for example with other computing devices 280, 290. The communication interface 212 of computing system 200 may be connected to such another computing system by means of a local area network (LAN) or a wide area network (WAN) such as for example the internet. Storage element interface 206 may comprise a storage interface such as for example a Serial Advanced Technology Attachment (SATA) interface or a Small Computer System Interface (SCSI) for connecting bus 210 to one or more storage elements 208, such as one or more local disks, for example SATA disk drives, and control the reading and writing of data to and/or from these storage elements 208. Although the storage elements 208 above is described as a local disk, in general any other suitable computer-readable media such as a removable magnetic disk, optical storage media such as a CD or DVD, -ROM disk, solid state drives, flash memory cards, ... could be used. The system 200 described above can also run as a virtual machine above the physical hardware.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. Computer-implemented method for obtaining confirmation of delivery of a physical item at a destination address in absence of the destined receiver at said destination address, said method being implemented by a smart device (103) carried by a delivery person of said physical item, said method comprising the steps of:
- obtaining said destination address;
- obtaining contact information (111) associated with said destination address from a contact database (102);
- using said contact information to establish a connection (112) between said smart device (103) and a user device (104) of said destined receiver running a delivery confirmation application;
- receiving from said user device (104) an identification (113) of said destined receiver and verifying said identification at said smart device (103);
- receiving from said user device (104) a digital signature (113) of said destined receiver thereby allowing said delivery person to leave said physical item at said destination address; and
- registering (114) delivery of said physical item in a delivery register (101).

2. Method according to claim 1, wherein said destination address or portions thereof are obtained from location information generated by a location tracking unit in said smart device (103).

3. Method according to claim 1 or claim 2, wherein said destination address or portions thereof are obtained from said delivery person through manual entry in said smart device (103).

4. Method according to one of claims 1 to 3, wherein said contact database (102) is stored locally in said smart device (103).

5. Method according to one of claims 1 to 3, wherein said contact database (102) is stored remotely in a cloud server.

6. Method according to one of claims 1 to 5, further comprising:
- after successful registration (114) of delivery of said physical item automatically obtaining a next destination address of a next destined receiver of a next physical item;
- obtaining next contact information associated with said next destination address from said contact database (102); and
- using said next contact information to establish a connection between said smart device (103) and a user device of said next destined receiver running said delivery confirmation application.

7. Method according to one of claims 1 to 6, wherein registering (114) delivery of said physical item in said delivery register (101) comprises:
- producing a picture of said physical item or scanning a code associated with said physical item; and
- transmitting said picture or said code to said delivery register (101) for storage.

8. Method according to claim 7, wherein registering (114) delivery of said physical item in said delivery register (101) comprises:
- obtaining time information indicative for when said picture was produced; and
- transmitting said time information to said delivery register (101) for storage.

9. Method according to one of claims 1 to 8, wherein registering (114) delivery of said physical item in said delivery register (101) comprises:
- producing location information; and
- transmitting said location information to said delivery register (101) for storage.

10. Method according to claim 9, wherein registering (114) delivery of said physical item in said delivery register (101) comprises:
- obtaining time information indicative for when said location information was produced; and
- transmitting said time information to said delivery register (101) for storage.

11. Method according to claim one of claims 1 to 10, wherein said contact information (111) of said destined receiver is kept invisible for said delivery person.

12. Method according to claim one of claims 1 to 11, wherein said contact information (111) enables to establish a connection with a powered representative of said destined receiver.

13. A computer program product comprising computer-executable instructions for performing the method according to one of claims 1 to 12 when the program is run on a computer.

14. A computer readable storage medium comprising the computer program product according to claim 13.

15. A data processing system (200) programmed for carrying out the method according to one of claims 1 to 12.
